Europäisches Patentamt

European Patent Office

Office européen des brevets

(11) Veröffentlichungsnummer: **0 476 728 A1**

## (12) EUROPÄISCHE PATENTANMELDUNG

(21) Anmeldenummer: **91202085.6**

(51) Int. Cl.5: **G01N 21/71**

(22) Anmeldetag: **15.08.91**

(30) Priorität: **05.09.90 DE 4028102**

(43) Veröffentlichungstag der Anmeldung:
**25.03.92 Patentblatt 92/13**

(84) Benannte Vertragsstaaten:
**AT BE CH DE ES FR GB GR IT LI LU NL SE**

(71) Anmelder: **METALLGESELLSCHAFT Aktiengesellschaft Reuterweg 14 W-6000 Frankurt am Main(DE)**

(72) Erfinder: **Pötzschke, Manfred, Dr.**
**Ulmenweg 45**
**W-6242 Kronberg 2(DE)**
Erfinder: **Sattler, Hans-Peter, Dr.**
**Ferdinandstrasse 22**
**W-6380 Bad Homburg(DE)**
Erfinder: **Hohla, Kristian, Dr.**
**Adolf-Sandberger Strasse 1 a**
**W-8000 München(DE)**
Erfinder: **Loree, Thomas, Dr.**
**340 Calle Sierpe**
**Santa Fe, NM 87501(US)**

(54) **Verfahren zur Analyse von Metallteilchen.**

(57) Bei einem Verfahren zur sortenmäßigen Analyse eines aus Metallteilchen unterschiedlicher stofflicher Zusammensetzung bestehenden Haufwerks wird an einem Meßort von jedem Metallteilchen (2) mittels eines gepulsten Lasers (9) Metall unter Bildung eines Plasmas abgetragen, aus dem Linienspektrum des Plasmas diskrete Spektrallinien herausgefiltert (12,11,8), aus deren Strahlungsintensität eine Kennzahl nach einem Algorithmus (13) gebildet und durch Vergleich (14) der Kennzahl mit vorgegebenen Grenzwerten ein Sortiersignal gewonnen.

Um unabhängig von der Dicke der Metallteilchen mit etwa gleicher Intensität einen Materialabtrag zu erreichen, wird ein Excimer-Laser eingesetzt.

Rank Xerox (UK) Business Services

EP 0 476 728 A1

Die Erfindung betrifft ein Verfahren zur sortenmäßigen Analyse eines aus verschiedenen, eine Korngröße von 1 bis 200 mm, vorzugsweise 10 bis 80 mm, aufweisenden Metallteilchen unterschiedlicher stofflicher Zusammensetzung bestehenden polydispersen Haufwerks auf der Basis der relativen Konzentration der am häufigsten vorkommenden Metalle, indem an einem Meßort von einem begrenzten Oberflächenbereich jedes Metallteilchens mittels eines gepulsten Lasers unter Bildung eines entsprechenden Plasmas Metall abgetragen wird, ggf. nachdem der begrenzte Oberflächenbereich vorher mittels eines Lasers gereinigt und das dabei entstandene Plasma beseitigt wird, aus dem Linienspektrum des Plasmas vorgegebene diskrete Spektrallinien oder Spektrallinienbereiche herausgefiltert, aus den Strahlungsintensitäten der Wellenlängen der herausgefilterten Spektrallinien bzw. Spektrallinienbereiche eine Kennzahl nach einem Algorithmus gebildet und durch Vergleich dieser Kennzahl mit vorgegebenen Grenzwerten ein Sortiersignal gewonnen wird.

Die Anwendung von Lasern in der Spektroskopie ermöglicht u.a. die lokale Spektralanalyse von Materialien in sehr kleinen Volumina bzw. auf sehr kleinen Flächen durch Fokussierung der Laserstrahlung. Das bei diesem Vorgang entstehende Plasma sendet eine Linienstrahlung aus diskreten Spektrallinien aus, die ganz oder teilweise mittels einer Spektrometer-Dioden-Anordnung erfaßt und in einem optischen Mehrkanal-Analysator ausgewertet werden, so daß wenige Millisekunden nach der Bildung des Plasmas die qualitative Analyse des Metallteilchens vorliegt. Dieses unter der Bezeichnung LIBS (Laser-Induced Breakdown Spectroscopy) in der Z.: EOSD Electro-Optical Systems Design, Vol. 14 (1982), No. 10, S. 35-41, beschriebene Verfahren wird unter Anwendung eines gepulsten Nd:YAG- oder $CO_2$-Lasers u.a. zur Sortierung von aus Metallteilchen unterschiedlicher stofflicher Zusammensetzung bestehenden Schrotten vorgeschlagen. Die Geschwindigkeit der Analyse der Metallteilchen wird lediglich durch die Wiederholungsrate des Lasers, die Geschwindigkeit des elektronischen Detektors und die Geschwindigkeit, mit der die Metallteilchen dem Meßort zugeführt werden können, begrenzt (Z.: Applied Spectroscopy, Vol. 41, 1987, No. 4, S. 572-579).

Eine Ausführungsform eines solchen Verfahrens ist aus der EP-A-0 293 983 bekannt, bei der mindestens 30 Metallteilchen mit einer Korngröße von 15 bis 65 mm einen Meßort durchlaufen, an dem jedes Metallteilchen mittels eines gepulsten Laserstrahls an einer Stelle der Oberfläche gereinigt, das entstehende Plasma beseitigt und die gereinigte Stelle erneut mit einem gepulsten Laserstrahl beaufschlagt wird. Aus der Linienstrahlung des dabei entstehenden Plasmas werden bestimmte vorgegebene Wellenlängen oder Wellenlängenbereiche herausgefiltert, aus deren Strahlungsintensitäten Verhältniswerte gebildet und diese Verhältniswerte zur Erzeugung eines Sortiersignals durch Vergleich mit einstellbaren Grenzwerten benutzt. Bei diesem Verfahren wird der gepulste Laserstrahl der eingesetzten, im nahen IR-Bereich arbeitenden Nd:YAG-Laser oder im mittleren IR-Bereich arbeitenden $CO_2$-Laser in aller Regel auf einem Punkt der Oberfläche des Metallteilchens direkt fokussiert und das Metall zum Schmelzen und Verdampfen gebracht, wobei es im Bereich der verbrannten Randzonen zum Abtrag von Verunreinigungen kommen kann, die das entstehende Plasma verschmutzen. Ein entscheidender Nachteil ist jedoch darin zu sehen, daß bedingt durch die unterschiedlichen Konturen der Oberfläche bzw. Dicke der Metallteilchen der Fokus des Laserstrahls nicht auf einem Punkt der Oberfläche liegt und damit auf der bestrahlten Oberfläche keine konstante Energiedichte erreicht wird.

Es ist daher die Aufgabe der vorliegenden Erfindung, das Verfahren des eingangs beschriebenen Aufbaus so auszugestalten, daß die erzeugten Plasmen neben der physikalisch unvermeidlichen Weißlichtstrahlung nur die für die Metallteilchen spezifischen diskreten Spektrallinien aussenden und unabhängig von der Dicke der Metallteilchen mit etwa gleicher Intensität abtragbar sind.

Als Lösung dieser Aufgabe ist vorgesehen, daß die Metallteilchen auf einer Linie mit Abstand, vorzugsweise von wenigstens 0,75 mm, hintereinanderliegend vereinzelt in stetigem Fluß von einer Aufgabestelle mit nachgeordnetem Meßort über einen festgelegten Förderweg zur jeweiligen Abwurfstelle transportiert und am Meßort mit einem Excimer-Laser bestrahlt werden.

Der Excimer-Laser ist ein im UV-Bereich mit kurzer Pulslänge arbeitender Edelgashalogenid-Laser, der sich durch einen großen Strahlquerschnitt in Verbindung mit hoher Pulsenergie und plateauförmiger Intensitätsverteilung sowie hoher Puls-zu-Puls-Stabilität auszeichnet. Aufgrund seiner relativ großen Divergenz kann der Laserstrahl großflächig über einen größeren Tiefenschärfebereich fokussiert werden, so daß eine Anpassung des Materialabtragungsprozesses an die verschiedenen Oberflächenkonturen bzw. Dicke der Metallteilchen und damit eine befriedigende Analyse der Metallteilchen möglich ist. Darüber hinaus besitzt ein Excimer-Laser gegenüber anderen gepulsten Lasern den Vorteil, daß seine Strahleigenschaften, Pulsdauer, Pulsenergie und vor allem Strahldivergenz - damit seine Fokussierbarkeit - unabhängig von der Pulsfolgefrequenz sind. Durch den lokal eng begrenzten Energieeintrag in das abzutragende Material wird eine Beanspruchung der Randzonen weitgehend und damit eine Verschmutzung der entstehenden Plasmen vermieden. Da der Excimer-Laser nicht in Luft zündet, kann das Plasma auch nicht durch das sich an Luft bildende Plasma negativ beeinflußt werden, d.h. das Spektrum des Luftplasmas muß nicht von dem Spektrum des Plasmas des Metallteilchens abgezogen werden.

Mit dem Excimer-Laser wird ein Plasma erzeugt, dessen spektrales Leuchten nahezu unabhängig von der Austrittsarbeit der Metalle ist.

Beim Einlauf der einzelnen Metallteilchen in den Meßort durchlaufen diese eine optische Schranke; mit Hilfe des dabei erzeugten Signals wird mit einer Detektor-Elektronik der Excimer-Laser gesteuert.

Damit es zur Schaltung durch das Ausgangssignal der optischen Schranke kommt, sollte der Abstand zwischen den einzelnen Metallteilchen wenigstens 0,75 mm betragen. Mit zunehmender Fördergeschwindigkeit wird ein größerer Abstand zwischen den einzelnen Metallteilchen erforderlich.

Die optische Schranke besteht aus einem auf eine Photozelle gerichteten Lichtstrahl, mit dessen Hilfe die Länge des einzelnen Metallteilchens gemessen wird.

Die optische Schranke kann auch aus einem Laserstrahl oder aus der Kombination von Lichtstrahl und Laserstrahl bestehen, so daß ein räumliches Erfassen des einzelnen Metallteilchens gegeben ist.

Im Rahmen der vorzugsweisen Ausgestaltung des Verfahrens werden von dem von dem Plasma emittierten Spektrum Spektrallinien im Wellenlängenbereich von 200 bis 800 nm herausgefiltert.

Die Pulsenergie des Excimer-Lasers auf dem Metallteilchen beträgt 30 bis 500 mJ.

Die Impulsrate des Excimer-Lasers beträgt 10 bis 500 Hz, vorzugsweise 100 bis 150 Hz, wobei in vorteilhafter Weise bei unterschiedlichen Frequenzen gleiche Laserstrahlqualität gewährleistet ist.

Um die Anzahl der Spektrallinien bzw. die Breite des Spektrallinienbereichs im Hinblick auf die Auswertung klein zu halten, werden die emittierten Spektrallinien für die Dauer von 0,2 bis 50 $\mu$s, vorzugsweise 1,5 bis 50 $\mu$s, nach dem Laserimpuls herausgefiltert; dadurch wird erreicht, daß das Hintergrundrauschen der Plasmastrahlung deutlich reduziert wird und damit die Spektren besser identifizierbar werden.

Die Erfindung ist nachfolgend anhand eines Ausführungsbeispiels und einer zugehörigen zeichnerischen Darstellung näher erläutert.

Auf einem mit einer Fördergeschwindigkeit von 2,5 m/s bewegten Gurtförderer (1) werden aus einem polydispersen Schrotthaufwerk, bestehend aus im Mittel

65 % Aluminium-Legierungsschrott
12 % Zink-Legierungsschrott
8 % Kupfer-Legierungsschrott
7 % Messing-Schrott
7 % Edelstahl-Schrott
1 % Blei-Legierungsschrott,
stammende, eine mittlere Korngröße von 30 mm aufweisende Metallteilchen (2) zur Spektralanalyse einem Meßort (3) zugeführt. Beim Eintritt in den Meßort (3) wird jedes Metallteilchen (2) durch den Lichtstrahl einer Photozelle und den über eine fokussierende Linse (5) und einen Spiegel (6) gelenkten Laserstrahl eines He/Ne-Lasers (7) erfaßt. Die dabei entstehenden Ausgangssignale von Photozelle (4) und He/Ne-Laser (7) werden mittels einer Detektor-Elektronik (8) in elektronische Signale umgewandelt und beide Signale nach ihrer Verknüpfung zur Auslösung des Excimer-Lasers (9) verwendet. Der Laserstrahl des Excimer-Lasers (9) wird über einen Spiegel (10), die Linse (5) und den Spiegel (6) auf das Metallteilchen (2) gelenkt. Durch den ersten Laserimpuls wird das Metallteilchen (2) an der Oberfläche partiell gereinigt; das dabei entstehende verunreinigte Plasma wird durch einen Luftstrom beseitigt. Der zweite, auf die gereinigte Oberflächenpartie des Metallteilchens (2) gerichtete Laserimpuls dient zur Erzeugung des Metallplasmas, das durch einen Spektral-Detektor (11) mit vorgesetztem Spektral-Filter (12) erfaßt wird, wobei durch den Spektral-Filter (12) nur diskrete Spektrallinien bzw. Spektrallinienbereiche während eines Zeitabschnittes von 20 $\mu$s nach dem Laserimpuls herausgefiltert werden. Die Öffnung des Zeitfensters des Spektral-Detektors (11) wird durch die Detektor-Elektronik (8) gesteuert, die auch rechnerlesbare Meßwerte erstellt. In einem Mikroprozessor (13) werden aus diesen Meßwerten zahlenmäßige Verhältniswerte gebildet, die mit vorgegebenen Grenzwerten verglichen und als Signale genommen werden. Diese Signale steuern über ein elektronisches Auslösesystem (14), das durch das Ausgangssignal der Photozelle (4) gestartet wird, eine Sortiereinrichtung.

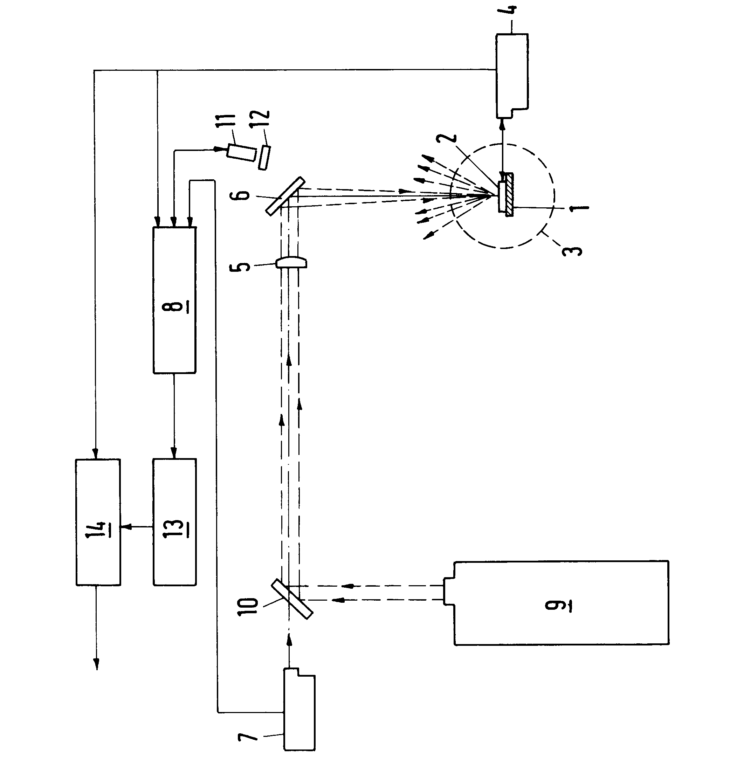

## Patentansprüche

1. Verfahren zur sortenmäßigen Analyse eines aus verschiedenen, eine Korngröße von 1 bis 200 mm, vorzugsweise 10 bis 80 mm, aufweisenden Metallteilchen unterschiedlicher stofflicher Zusammensetzung bestehenden polydispersen Haufwerks auf der Basis der relativen Konzentration der am häufigsten vorkommenden Metalle, indem an einem Meßort von einem begrenzten Oberflächenbereich jedes Metallteilchens mittels eines gepulsten Lasers unter Bildung eines entsprechenden Plasmas Metall abgetragen wird, ggf. nachdem der begrenzte Oberflächenbereich vorher mittels eines Lasers gereinigt und das dabei entstandene Plasma beseitigt wird, aus dem Linienspektrum des Plasmas vorgegebene diskrete Spektrallinien oder Spektrallinienbereiche herausgefiltert, aus den Strahlungsintensitäten der Wellenlängen der herausgefilterten Spektrallinien bzw. Spektrallinienbereiche eine Kennzahl nach einem Algorithmus gebildet und durch Vergleich dieser Kennzahl mit vorgegebenen Grenzwerten ein Sortiersignal gewonnen wird, dadurch gekennzeichnet, daß Metallteilchen auf einer Linie mit Abstand hintereinanderliegend vereinzelt in stetigem Fluß von einer Aufgabestelle mit nachgeordnetem Meßort, an dem sie mit einem Excimer-Laser bestrahlt werden, über einen festgelegten Förderweg zur jeweiligen Abwurfstelle transportiert werden.

2.  Verfahren nach Anspruch 1, dadurch gekennzeichnet, daß der Abstand zwischen den Metallteilchen wenigstens 0,75 mm beträgt.

3.  Verfahren nach den Ansprüchen 1 und 2, dadurch gekennzeichnet, daß die einzelnen Metallteilchen beim Einlauf in den Meßort eine optische Schranke durchlaufen und mit Hilfe des dabei erzeugten Signals mit einer Triggerschaltung der Excimer-Laser gesteuert wird.

4.  Verfahren nach Anspruch 3, dadurch gekennzeichnet, daß die optische Schranke aus einem auf eine Photozelle geschickten Lichtstrahl gebildet wird.

5.  Verfahren nach Anspruch 3 und/oder 4, dadurch gekennzeichnet, daß die optische Schranke aus einem Laserstrahl gebildet wird.

6.  Verfahren nach den Ansprüchen 1 bis 5, dadurch gekennzeichnet, daß aus dem von dem erzeugten Plasma emittierten Spektrum Spektrallinien im Wellenlängenbereich von 200 bis 800 nm herausgefiltert werden.

7.  Verfahren nach den Ansprüchen 1 bis 6, dadurch gekennzeichnet, daß die Pulsenergie des Excimer-Lasers auf dem Metallteilchen 30 bis 500 mJ beträgt.

8.  Verfahren nach den Ansprüchen 1 bis 7, dadurch gekennzeichnet, daß die Impulsrate des Excimer-Lasers 10 bis 500 Hz, vorzugsweise 100 bis 150 Hz, beträgt.

9.  Verfahren nach den Ansprüchen 1 bis 8, dadurch gekennzeichnet, daß die emittierten Spektrallinien für die Dauer von 0,2 bis 50 $\mu$s, vorzugsweise 1,5 bis 50 $\mu$s, nach dem Laserimpuls herausgefiltert werden.

**Europäisches Patentamt**

# EUROPÄISCHER RECHERCHENBERICHT

Nummer der Anmeldung

**EP 91 20 2085**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 293 983   (METALLGESELLSCHAFT) <br> * column 1, line 1 - line 10; figure 1 * * * column 2, line 4 - line 51 * * * column 4, line 7 - line 12 * * * column 4, line 36 - line 53 * * <br> – – – | 1 | G 01 N 21/71 |
| A | EP-A-0 184 590   (KAWASAKI STEEL) <br> * page 5, line 19 - line 29 * * <br> – – – | 1 | |
| A | TRAC, TRENDS IN ANALYTICAL CHEMISTRY. vol. 7, no. 4, April 1988, CAMBRIDGE GB pages 137 - 142; SCOTT ET AL.: 'laser ablation and the laser microprobe' <br> * page 138, column 2, paragraph 3 - page 139, column 1, paragraph 1; figure 3 * * <br> – – – | 1 | |
| A | ANALYTICAL CHEMISTRY. vol. 61, no. 22, November 1989, COLUMBUS US pages 2557 - 2562; ZHU ET AL.: 'elemental analysis on chemiluminescence in the laser microprobe' abstract <br> * page 2558, column 1, paragraph 2 -paragraph 3; figure 1 * * <br> – – – | 1 | |
| A | JOURNAL OF APPLIED PHYSICS. vol. 64, no. 9, November 1988, NEW YORK US pages 4657 - 4563; DYER ET AL.: 'spectroscopic and fast photographic studies of excimer laser polymer ablation' <br> * page 4657, column 2, paragraph 3 - page 4658, column 1, paragraph 1; figure 1 * * * page 4663, column 1, paragraph 3 <br> * EP 91202085030 * <br> – – – – – | 1 | **RECHERCHIERTE SACHGEBIETE (Int. Cl.5)** <br><br> G 01 N |

Der vorliegende Recherchenbericht wurde für alle Patentansprüche erstellt

| Recherchenort | Abschlußdatum der Recherche | Prüfer |
|---|---|---|
| Den Haag | 03 Januar 92 | ZINNGREBE U. |